# EUROPEAN PATENT APPLICATION

(11) **EP 3 950 579 A1**
(43) Date of publication of application: **09.02.2022**
(21) Application number: 20189083.7
(22) Date of filing: 03.08.2020
(51) Int. Cl.: C01B 6/21, C01B 35/00, H01M 10/00

(54) **METHOD FOR PREPARING SOLVENT-FREE LIB11H14 AND ITS USE**

(71) Applicant: EMPA Eidgenössische Materialprüfungs- und Forschungsanstalt, 8600 ZH Dübendorf (CH)
(72) Inventor: Payandeh, Seyedhosein, 8600 Dübendorf (CH); Remhof, Arndt, 8600 Dübendorf (CH); Battaglia, Corsin, 8314 Lindau (CH)
(74) Representative: Kasche & Partner

(57) **Abstract**

The present invention is directed to a method for preparing anhydrous LiB₁₁H₁₄ metal salts in a solvent with an excess of Li or a Li-base, and to corresponding anhydrous LiB₁₁H₁₄ compounds or compositions with high purity. The present invention further encompasses the use of anhydrous LiB₁₁H₁₄ compounds or compositions for preparing a Li-ion conducting solid state electrolyte for use in lithium batteries and an electrolyte or battery comprising an anhydrous LiB₁₁H₁₄ compound or composition.

## Description

The present invention is directed to a method for preparing anhydrous LiB₁₁H₁₄ metal salts in a solvent with an excess of Li or a Li-base, and to corresponding anhydrous LiB₁₁H₁₄ compounds or compositions with high purity. The present invention further encompasses the use of anhydrous LiB₁₁H₁₄ compounds or compositions for preparing a Li-ion conducting solid state electrolyte for use in lithium batteries and an electrolyte or battery comprising an anhydrous LiB₁₁H₁₄ compound or composition.

Rechargeable lithium and sodium all-solid-state batteries will replace the currently used lithium-ion technology in the mid-term future. A reliable, safe and inexpensive solid-state conductor with sufficiently high ionic conductivity is the prerequisite for this technology.

Currently, the only Li-ion solid-state electrolyte in the hydroborates family with sufficient ionic conductivity is Li(CB₉H₁₀)_{0.7}(CB₁₁H₁₂)_{0.3} (S. Kim., Nat. Commun., 2019, 10, 1081). However, Li(CB₉H₁₀) is expensive with a price >120 000 €/kg and challenging to synthesize, which hinders the practical application of this material. The CB₉H₁₀⁻ anion can be replaced in the electrolyte by the B₁₁H₁₄⁻ anion to obtain a Li-ion solid state electrolyte with similar properties. LiB₁₁H₁₄ is easy to synthesize based on cheap reactants (sodium borohydride 10 €/kg, n-Butyl lithium 10 €/kg, 1-bromopentane 20 €/kg) (G. Dunks., Inorg. Chem, 1981, 20, 1692; S. Payandeh., Chem. Mater. 2020, 32, 3, 1101). However, preparing solvent-free LiB₁₁H₁₄ seems impossible. Currently the only commercial supplier (Katchem, Czech Republic) of this compound provides only the hydrate phase, LiB₁₁H₁₄.(H₂O)ₙ. The removal of the coordinated water in this compound by heat treatment forms LiB₁₁H₁₃OH and Li₂(B₁₁H₁₃)₂O as additional impurity phases.

The objective underlying the present invention is the provision of an anhydrous LiB₁₁H₁₄ compound or a composition comprising said compound, the compound optionally having high purity of at least 90 or more percent by weight, optionally with the proviso that it is substantially free of its hydrates, LiB₁₁H₁₃OH and/or Li(B₁₁H₁₃)₂O. It is a further objective to provide cost-effective Li-ion conducting solid state electrolytes for use in corresponding lithium batteries.

The above objective is solved according to the invention by a method for preparing anhydrous LiB₁₁H₁₄ metal salts, comprising the steps
(ia) reacting RₙZX_{y}B₁₁H₁₄, wherein each R is selected independently from the group consisting of hydrogen, phenyl, C₁₋₆ branched or unbranched alkyl, Z is selected from the group consisting of C, Si, Ge, Sn, N, P, As, Sb, O and S, and X is selected from the group consisting of H, F, Cl, Br and I, and n and y are each independently a number from 1 to 10,
   in a solvent with an excess of Li or a Li-base, optionally in an inert atmosphere; or
(ib) reacting a LiB₁₁H₁₄(H₂O)ₘ metal salt, wherein m is 0.5 to 10, with Li or a Li-base in a solvent, optionally water; and
(ii) isolating LiB₁₁H₁₄ and Li₂B₁₁H₁₃ for the product of step (ia) by removal of solvent and addition of water, if water is not already present (since the solvent of (ia) could possibly be or comprise water), or isolating LiB₁₁H₁₄ and Li₂B₁₁H₁₃ for the product of step (ib) by removal of solvent and addition of water, if water is not already present, and removal of water-insoluble RₙZX_{y}B₁₁H₁₄;
(iii) heat treatment and drying of LiB₁₁H₁₄ and Li₂B₁₁H₁₃ from step (ii) under vacuum, or in an inert atmosphere to form LiB₁₁H₁₄ and LiOH;
(iv) removal of LiOH, optionally in an inert atmosphere.

It was surprisingly found that the anhydrous LiB₁₁H₁₄ compound can be prepared from cost-effective starting materials and without unwanted by-products such as LiB₁₁H₁₃OH and Li(B₁₁H₁₃)₂O by the method of the present invention. Furthermore, this method allows for a scalable production of solvent free LiB₁₁H₁₄ as a solid electrolyte component up to industrially relevant amounts. Without wishing to be bound by theory it seems that the intermediate synthesis and subsequent oxidation of Li₂B₁₁H₁₃ by heat treatment to LiB₁₁H₁₄ avoids undesirable by-products that would impair the use of LiB₁₁H₁₄ as a solid electrolyte component.

The intermediate product mixture of LiB₁₁H₁₄ and Li₂B₁₁H₁₃ can be prepared directly from RₙZX_{y}B₁₁H₁₄ or by dehydration and partial reduction of a hydrate form of LiB₁₁H₁₄.

For RₙZX_{y}B₁₁H₁₄ Z may be optionally selected from the group consisting of C, N and S, X is selected from the group consisting of H, Cl and I, and n and y are each independently a number from 1 to 4.

For example, in one embodiment of the present invention RₙZX_{y}B₁₁H₁₄ may be (R)₄NB₁₁H₁₄.

In another embodiment each R in RₙZX_{y}B₁₁H₁₄ or (R)₄NB₁₁H₁₄ is selected independently from hydrogen, methyl, ethyl or n-butyl.

In a further specific embodiment (R)₄N in (R)₄NB₁₁H₁₄ is (R¹)₃HN, wherein R¹ in each case is selected from hydrogen, methyl, ethyl or n-butyl.

In alternative embodiments for practicing the present invention RₙZX_{y}B₁₁H₁₄ may be selected from the group consisting of (CH₃)₃NHB₁₁H₁₄, (C₂H₅)₃NHB₁₁H₁₄, (CH₃)₃SIB₁₁H₁₄, NH₄B₁₁H₁₄ and C₁₆H₃₆NB₁₁H₁₄ (Tetra-n-butylammonium).

In another embodiment of the method of the present invention the solvent in step (ia) is a solvent with a boiling point below 150 °C, optionally consisting of or comprising an ether, water, alcohol or ketone, optionally selected from the group consisting of tetrahydrofuran, dioxane, dimethoxyethane, ethanol, methanol, isopropanol, acetone, 2-butanone, butanal and 2-pentanone, optionally the solvent is tetrahydrofuran.

The term solvent as used herein is understood to include one or more solvent compounds.

The inert atmospheres for use or optional for the steps of the invention may be or comprise, for example, argon, nitrogen, helium or mixtures thereof.

In a specific embodiment the reagent in step (ia) is n-butyllithium and the solvent is optionally tetrahydrofuran.

For the hydrated LiB₁₁H₁₄(H₂O)ₙ metal salt for use in step (ib) may be 0.5 to 10, for example, 1 to 3, optionally 1, 2 or 3, for example, n is about 2 or 3. In this regard it is noted that it is hard to determine the exact water content of these hydrated borates and that the knowledge of the exact hydrate water content of the B₁₁H₁₄(H₂O)ₙ metal salt, optionally LiB₁₁H₁₄(H₂O)ₙ, is not relevant for practicing the method of the present invention.

In another embodiment the reagent for use in step (ib) is n-butyllithium or LiOH.

For example, the solvent in step (ib) may comprise or consist of and is selected from the group of solvents consisting of THF, water, esters, optionally cyclic esters, ketones and alcohols, optionally selected from the group consisting of tetrahydrofuran, dioxane, dimethoxyethane, ethanol, methanol, isopropanol, acetone, 2-butanone, butanal, and 2-pentanone, optionally the solvent in step (ib) is tetrahydrofuran or water. Most conveniently and cheap, the solvent for step (ib) may be or comprise water.

Once the mixture of LiB₁₁H₁₄ and Li₂B₁₁H₁₃ is obtained by one of steps (ia) or (ib), these two compounds are isolated together in step (ii). LiB₁₁H₁₄ and Li₂B₁₁H₁₃ for the product of step (ia) are isolated by removal of solvent and addition of water, if water is not already present. LiB₁₁H₁₄ and Li₂B₁₁H₁₃ for the product of step (ib) are isolated by removal of solvent and addition of water, if water is not already present, and removal of water-insoluble starting material RₙZX_{y}B₁₁H₁₄, optionally by centrifugation and/or filtration, followed by the removal of the water.

Once the mixture of LiB₁₁H₁₄ and Li₂B₁₁H₁₃ is isolated, i.e. free of substantial amounts of solvents, other salts, remaining starting material RₙZX_{y}B₁₁H₁₄, etc., that might interfere, and the isolated mixture is dissolved in water, it is subjected to a heat treatment and drying under vacuum or, alternatively, in an inert atmosphere to form LiB₁₁H₁₄ and LiOH from Li₂B₁₁H₁₃ + H₂O. The formation of LiOH drives the reaction toward LiB₁₁H₁₄ production.

For example, the heat treatment may be done under vacuum at a pressure range of 10 to 10⁻³ mbar, optionally 10⁻² to 10⁻³ mbar, and at a temperature in the range of 50 to 150 or 60 to 120 °C optionally 90 to 100°C. It is noted that the skilled person will routinely choose a vacuum pressure and temperature that will avoid product decomposition.

The removal of LiOH from LiB₁₁H₁₄ in step (iv) may, for example, be done by addition of a suitable solvent that does not dissolve LiOH but the LiB₁₁H₁₄ product, optionally THF or other solvents such as, e.g. isopropanol or ethanol, followed by, for example, filtration and/or centrifugation of solid LiOH, and subsequent optional removal of said solvent.

In one embodiment of the method of the present invention steps (ia) and (iv) use THF or a THF-comprising solvent and/or step (ib) uses water or a water-comprising solvent.

The method of the present invention for the first time makes available an anhydrous LiB₁₁H₁₄ compound or a composition comprising an anhydrous LiB₁₁H₁₄ compound with high purity, optionally an or comprising an anhydrous LiB₁₁H₁₄ compound in a purity of more than 90, 95, 97, 98 or 99 % by weight, optionally with the proviso that it is substantially free of its hydrates, LiB₁₁H₁₃OH and/or Li(B₁₁H₁₃)₂O. The term substantially free, as understood in the context of the present invention, is meant to indicate impurities of less than 10 %, optionally less than 5%, optionally less than 3, 2 or 1 %-by weight impurities, e.g. of LiB₁₁H₁₄ hydrates, LiB₁₁H₁₃OH and/or Li(B₁₁H₁₃)₂O.

Therefore and in a further aspect, the present invention pertains to an anhydrous LiB₁₁H₁₄ compound or a composition comprising an anhydrous LiB₁₁H₁₄ compound, optionally with the proviso that it is substantially free of its hydrates, LiB₁₁H₁₃OH and/or Li(B₁₁H₁₃)₂O. In a specific embodiment the anhydrous LiB₁₁H₁₄ compound is prepared by a method according to method of the invention as described herein.

These compounds and compositions have utility for preparing Li-ion conducting solid state electrolytes and lithium batteries.

After synthesis of pure LiB₁₁H₁₄, anion mixing as a known strategy can be used to introduce disorder in the structure and improve ionic conductivity at low temperatures (S. Payandeh. Chem. Mater. 2020, 32, 3, 1101; L. Duchêne, Chem. Commun. 2017, 53, 4195). For this purpose, LiB₁₁H₁₄ can be mixed with LiHa (Ha = F, Cl, Br, I), LiₙC_{z}BₓH_{y} or LiₙBₓH(_{y-w})Ha_{w}(n, z, x, y, w = 1-20), for example, such as LiBH₄, LiCB₉H₁₀, LiCB₁₁H₁₂, Li₂B₁₂H₁₂, Li₂B₁₀H₁₀, Li₂B₆H₆I₆, Li₂B₁₁H₁₃ forming novel ionic conductors with ionic conductivities in the range of 10⁻⁴ to 10⁻³ S/cm at 25 °C. The electrolyte can then mixed with a cathode active material by physical mixing or impregnation through solution processing (A.Gigante, ChemSusChem, 2019, 4, 4832; L. Duchêne, Energy Environ. Sci, 2017, 10, 2609; L. Duchêne, Energy Storage Mater. 2020, 26, 543; L. Duchêne, Energy Storage Mater. 2020, 25, 782). Consequently, the present invention relates in a further aspect to the use of anhydrous LiB₁₁H₁₄ Compound or compositions thereof for preparing a Li-ion conducting solid state electrolyte for use in lithium batteries.

In one embodiment, the invention is directed to an electrolyte and/or battery comprising an anhydrous LiB₁₁H₁₄ compound or a composition of the invention, optionally comprising an electrolyte Li_{x+y}(B₁₁H₁₄)ₓ(CB₁₁H₁₂)_{y}, Li_{x+2y}(B₁₁H₁₄)ₓ(B₁₂H₁₂)_{y}, Li_{x+y}(B₁₁H₁₄)(CB₉H₁₀)_{y} wherein X is 1 to 9, optionally about 1 to 2, and Y is 1 to 9, optionally about 1 to 2.

In the following the present invention will be further illustrated by way of representative examples, none of which are to be interpreted as limiting the scope of the invention beyond the cited claims.

### Figures

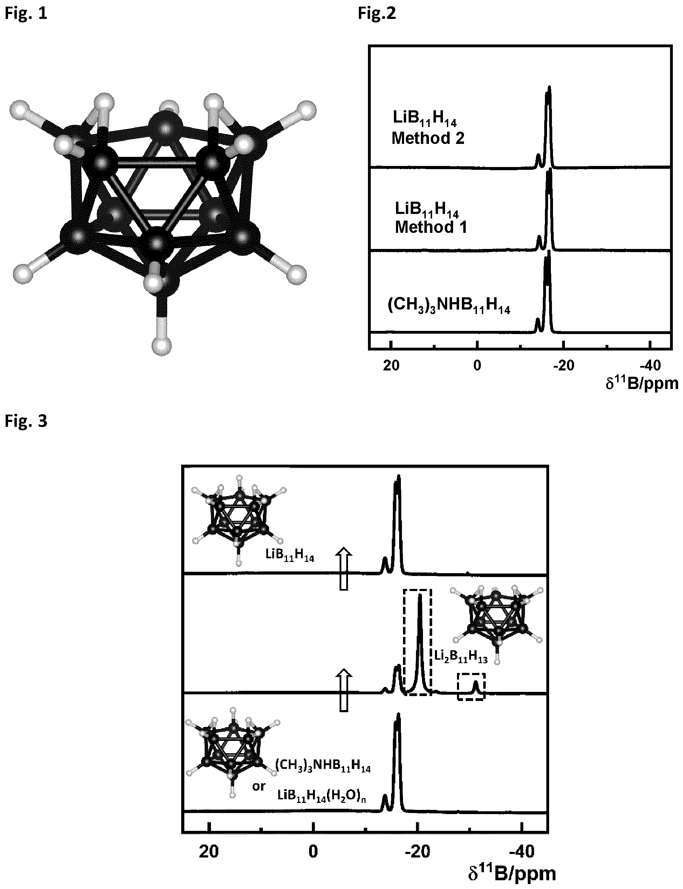

**Fig. 1** shows a structure model of the [B₁₁H₁₄]⁻ anion.
**Fig. 2** shows ¹¹B NMR spectra: The bottom reference spectrum is from the starting material (CH₃)₃NHB₁₁H₁₄ and shows the characteristic ¹¹B NMR pattern, i.e. a triplet with fixed position and intensity ratios. The middle and top spectra are from the final products obtained by methods 1 (ia) and 2 (ib), respectively.
**Fig. 3** shows structure models and corresponding ¹¹B NMR spectra: The bottom reference spectrum is of the starting materials ((CH₃)₃NHB₁₁H₁₄ in method 1 or LiB₁₁H₁₄(H₂O)ₙ in method 2) and features the characteristic ¹¹B NMR pattern, i.e. a triplet with a fixed position and intensity ratios. The middle ¹¹B NMR pattern was recorded after step (ii) (isolation of products from steps (ia) and ib)) and shows the characteristic resonances of the [B₁₁H₁₄]⁻ and [B₁₁H₁₃]²⁻(in dashed boxes) anion. The top ¹¹B NMR spectrum is of the final anhydrous product Li[B₁₁H₁₄].

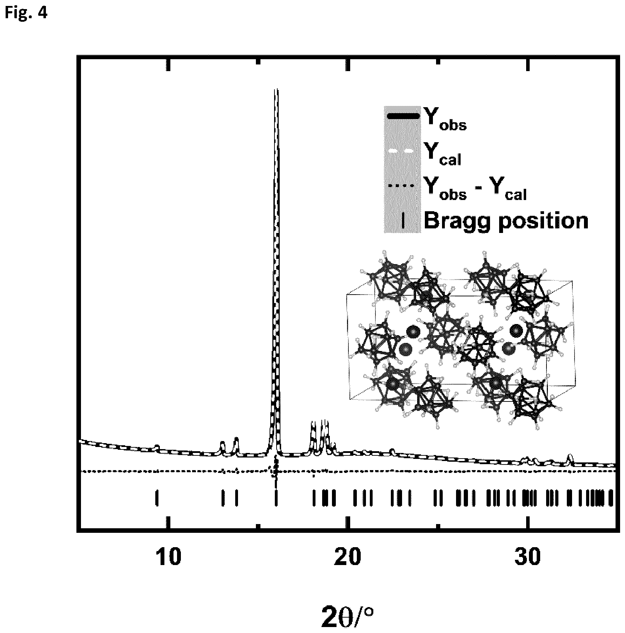

**Fig. 4** shows the X-ray diffraction pattern of the product (Y_{obs}, black) and a fit resulting from a Rietveld refinement based on the structural model shown in the inset (V_{cal}, white dashed line). The black dotted line (Y_{obs} - V_{cal}) shows the difference between the observed and the calculated pattern. The inset shows the structural model used: Li atoms are depicted as big black spheres, B atoms in black and H atoms as small grey spheres. The calculated pattern matched the observed.

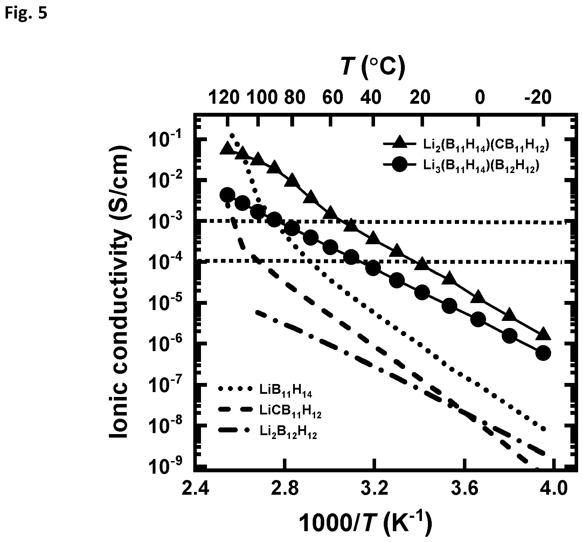

**Fig. 5** is a graph showing the ionic conductivities of pure anhydrous LiB₁₁H₁₄ and other Li-hydroborates LiCB₁₁H₁₂, and Li₂B₁₂H₁₂, and mixtures thereof demonstrating a significant increase in conductivity for compositions comprising anhydrous LiB₁₁H₁₄. LiB₁₁H₁₄ (dotted line), LiCB₁₁H₁₂ (dashed line), Li₂B₁₂H₁₂ (dashed dotted line), and of the mixes systems Li₂(B₁₁H₁₄)(CB₁₁H₁₂) (triangles) and Li₃(B₁₁H₁₄)(B₁₂₁H₁₂) (circles). The horizontal lines mark the conductivity values of 10⁻⁴ and 10⁻³ S/cm, respectively.

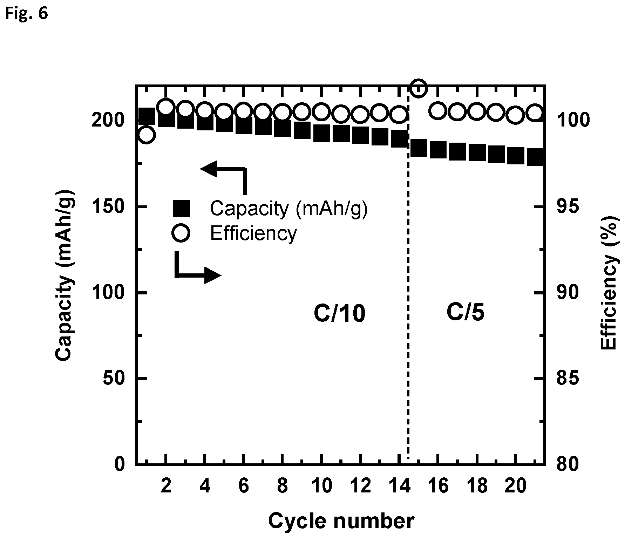

**Fig. 6** is a graph depicting the battery cycling of a Li|Li₂(B₁₁H₁₄)(CB₁₁H₁₂) ITiS₂ all-solid-state cell. The cell shows a coulombic efficiency close to 100% and a moderate capacity fading at C/10 and C/5.

### Examples

### Example 1 - Method for preparing LiB₁₁H₁₄ from (CH₃)₃NHB₁₁H₁₄

(CH₃)₃NHB₁₁H₁₄ (400 mg, 2.07 mmol) and 15 ml THF were transferred to a round bottom glass flask and sealed in the glovebox. n-butyllithium (BuLi, 2.3 ml, 3.72 mmol) was added under argon flow outside the glovebox and the suspension was stirred at room temperature for 1-2 h under argon flow and a mixture of Li₂B₁₁H₁₃ and LiB₁₁H₁₄ formed (step ia). Subsequently, the reaction was transferred to a rotary evaporator and the solvent was removed using a rotary evaporator at 60 °C. 20 mL of high purity water (Milli-Q) was added to the remaining solid and the solution was centrifuged at 4000 rpm for 10 minutes to separate the possibly unreacted (CH₃)₃NHB₁₁H₁₄ which is not soluble in water (step ii). The solution was then transferred to a rotary evaporator and the water was removed at 80 °C followed by 2 h heat treatment at 90 °C under vacuum using a Schlenk line. This heating in aqueous environment also reduces Li₂B₁₁H₁₃ is to LiB₁₁H₁₄ and LiOH (step iii). To separate the LiB₁₁H₁₄, 20-40 mL of THF were added (step iv) to the powder in the glovebox which dissolved only the desired product. The suspension was transferred to falcon tubes in the glovebox, sealed and centrifuged at 4000 rpm for 10 minutes to remove the LiOH.

The resulting clear solution containing only LiB₁₁H₁₄ was transferred from falcon tubes to a glass vial inside the glovebox and THF was removed using a rotary evaporator at 80 °C. The final coordinating THF was removed by annealing the powder at 100 °C for 16 h under vacuum using a schlenk line (step iv).

### Example 2 - Method for preparing LiB₁₁H₁₄ from LiB₁₁H₁₄(H₂O)ₙ

500 mg of purchased LiB₁₁H₁₄(H₂O)ₙ (2.84 mmol for n = 2), 18.94 mg LiOH (0.79 mmol) and 50 mL Milli-Q water were transferred to a round bottom glass flask and stirred for 30 min at RT until full dissolution. Water and LiOH were removed using the same procedure as described for Example 1 (steps iii, iv).

### Example 3 - Proof of high purity anhydrous LiB₁₁H₁₄ by ¹¹B NMR and X-ray diffraction

The starting material (CH₃)₃NHB₁₁H₁₄ and the anhydrous LiB₁₁H₁₄ products resulting from both options (ia) and (ib) of the above-described method were analyzed by NMR. The characteristic triplet in the starting material as well as in the pure products is demonstrated in Fig. 2.

The intermediate borate product mix isolated in step (ii) was identified by ¹¹B NMR patterns showing the characteristic resonances of the [B₁₁H₁₄]⁻ and [B₁₁H₁₃]²⁻ anions (see Fig. 3).

An NMR only proofs the chemical structure of the anion. For further proof of the crystal structure of the anhydrous LiB₁₁H₁₄ products the X-ray diffraction pattern of the product was recorded. Powder X-ray diffraction (PXRD) data were collected in symmetric θ-2θ mode in the 2θ range of 5-90° using Cu-Kα-radiation in transmission geometry. A focusing mirror was used to remove the K_{β}-radiation. The crystal structure was solved using global optimization methods and was confirmed by density functional theory (DFT) calculations. In addition, the Rietveld refinement of the PXRD pattern of the synthesized sample, shows a perfect match with the calculated PXRD pattern of the anhydrous LiB₁₁H₁₄ confirming the stoichiometry.

Fig. 4 proves and shows the crystal structure of an anhydrous LiB₁₁H₁₄ for the first time.

### Example 4 - Determination of ionic conductivity and mixed hydroborates

It was demonstrated that the synthesized anhydrous LiB₁₁H₁₄ exhibits a superior Li-ionic conductivity when compared to other Li-hydroborates such as LiCB₁₁H₁₂ and Li₂B₁₂H₁₂. Mixing anhydrous LiB₁₁H₁₄ with the aforementioned hydroborates, especially with LiCB₁₁H₁₂ increases the conductivity significantly (see Fig. 5). LiCB₁₁H₁₂ and Li₂B₁₂H₁₂ are commercially available. Ball milling as a mechano-chemical process was used for mixing the powders. Therefore, pre-grinded physical mixtures of the constituent powders were ball milled (BM) in different molar ratios for 15 minutes in 5 repetitions using stainless steel vials and balls (5 mm) with balls to sample ratio of 15-40 to 1.

### Example 5 - Determination of ionic conductivity and mixed hydroborates

The cathode active material TiS₂ and the electrolyte powders were weighed in a 2:3 mass ratio and mixed by using mortar and pestle for 15 min. The mixture was used as the composite positive electrode.

First, 60-100 mg of the electrolyte powder was placed into a 12-mm-diameter die and uniaxially pressed at 60-100 MPa. Secondly, 2 to 4mg of the composite mixture was added on the electrolyte and uniaxially pressed at 150-400 MPa to form a two layer pellet consisting of the electrolyte and cathode. Finally, Li metal was used as anode and placed on the opposite side of the pellet. The battery was assembled in a Swagelok cell and was cycled at 60 °C in the voltage ranges of 1.6 - 2.5 V (vs. Li⁺/Li). The battery cycling of the so-produced Li | Li₂(B₁₁H₁₄)(CB₁₁H₁₂)|TiS₂ all-solid-state cell demonstrated coulombic efficiency close to 100% and a moderate capacity fading at cycles C/10 and C/5.

## Claims

1. Method for preparing anhydrous LiB₁₁H₁₄ metal salts, comprising the steps
(ia) reacting RₙZX_{y}B₁₁H₁₄, wherein each R is selected independently from the group consisting of hydrogen, phenyl, C₁₋₆ branched or unbranched alkyl, Z is selected from the group consisting of C, Si, Ge, Sn, N, P, As, Sb, O and S, and X is selected from the group consisting of H, F, Cl, Br and I, and n and y are each independently a number from 1 to 10, in a solvent with an excess of Li or a Li-base; or
(ib) reacting a LiB₁₁H₁₄(H₂O)ₘ metal salt, wherein m is 0.5 to 10 or 1 to 3, optionally 1, 2 or 3, with Li or a Li-base in a solvent, optionally water; and
(ii) isolating LiB₁₁H₁₄ and Li₂B₁₁H₁₃ for the product of step (ia) by removal of solvent and addition of water, if water is not already present, or isolating LiB₁₁H₁₄ and LbB₁₁H₁₃ for the product of step (ib) by removal of solvent and addition of water, if water is not already present, and removal of water-insoluble RₙZX_{y}B₁₁H₁₄;
(iii) heat treatment and drying of LiB₁₁H₁₄ and Li₂B₁₁H₁₃ from step (ii) under vacuum or in an inert atmosphere to form LiB₁₁H₁₄ and LiOH;
(iv) removal of LiOH.

2. The method according to claim 1, wherein Z is selected from the group consisting of C, N and S, X is selected from the group consisting of H, Cl and I, and n and y are each independently a number from 1 to 4.

3. The method according to claim 1 or 2, wherein RₙZX_{y}B₁₁H₁₄ is (R)₄NB₁₁H₁₄, and/or wherein each R in RₙZX_{y}B₁₁H₁₄ or (R)₄NB₁₁H₁₄ is selected independently from hydrogen, methyl, ethyl or n-butyl.

4. The method according to claim 3, wherein (R)₄N in (R)₄NB₁₁H₁₄ is (R¹)₃HN, wherein R¹ in each case is selected from hydrogen, methyl, ethyl or n-butyl.

5. The method according to any of claims 1 to 4, wherein RₙZX_{y}B₁₁H₁₄ is selected from the group consisting of (CH₃)₃NHB₁₁H₁₄, (C₂H₅)₃NHB₁₁H₁₄, (CH₃)₃SIB₁₁H₁₄, NH₄B₁₁H₁₄ and C₁₆H₃₆NB₁₁H₁₄(Tetra-n-butylammonium).

6. The method according to any of claims 1 to 5, wherein the solvent in step (ia) is a solvent with a boiling point below 150 °C, optionally consisting of or comprising an ether, water, alcohol or ketone, optionally selected from the group consisting of tetrahydrofuran, dioxane, dimethoxyethane, ethanol, methanol, isopropanol, acetone, 2-butanone, butanal, and 2-pentanone, optionally the solvent is tetrahydrofuran.

7. The method according to any of claims 1 to 6, wherein the Li-base in step (ia) is selected from the group consisting of LiH, LiOH, methyllithium (CH₃Li), ethyllithium (CH₃CH₂Li), tert-butyllithium (C₄H₉Li), sec-butyllithium (C₄H₉Li), n-butyllithium (C₄H₉Li), n-hexyllithium (C₆H₁₃Li) and phenyllithium (C₆H₅Li), optionally the Li-base is n-butyllithium.

8. The method according to any of claims 1 to 7, wherein the Li-base in step (ib) is selected from the group consisting of LiH, LiOH, methyllithium (CH₃Li), ethyllithium (CH₃CH₂Li), tert-butyllithium (C₄H₉Li), sec-butyllithium (C₄H₉Li), n-butyllithium (C₄H₉Li), n-hexyllithium (C₆H₁₃Li) and phenyllithium (C₆H₅Li), optionally the Li-base is n-butyllithium or LiOH.

9. The method according to any of claims 1 to 8, wherein the solvent in step (ib) comprises or consists of and is selected from the group of solvents consisting of THF, water, esters, optionally cyclic esters, ketones and alcohols, optionally selected from the group consisting of tetrahydrofuran, dioxane, dimethoxyethane, ethanol, methanol, isopropanol, water, acetone, 2-butanone, butanal and 2-pentanone, optionally the solvent in step (ib) is water.

10. The method according to any of claims 1 to 9, wherein
(a) in step (ii) LiB₁₁H₁₄ and Li₂B₁₁H₁₃ are isolated by solvent removal, and water is added and for the product of step (ib) remaining insoluble RₙZX_{y}B₁₁H₁₄ is removed, optionally by centrifugation and/or filtration, followed by the removal of the water; and/or
(b) heat treatment of LiB₁₁H₁₄ and Li₂B₁₁H₁₃ from step (ii) is under vacuum at a pressure range of 10 to 10⁻³ mbar, optionally 10⁻² to 10⁻³ mbar, and at a temperature in the range of 50 to 150°C or 60 to 120°C, optionally 90 to 100 °C.

11. The method according to any of claims 1 to 10, wherein the removal of LiOH in step (iv) is by addition of a solvent that does not dissolve LiOH, optionally THF, isopropanol or ethanol, filtration and/or centrifugation of solid LiOH, and subsequent optional removal of solvent.

12. An anhydrous LiB₁₁H₁₄ compound or a composition comprising an anhydrous LiB₁₁H₁₄ compound, optionally an or comprising an anhydrous LiB₁₁H₁₄ compound in a purity of more than 90, 95, 97 or 98 % by weight, optionally with the proviso that it is substantially free of its hydrates, LiB₁₁H₁₃OH and/or Li(B₁₁H₁₃)₂O.

13. An anhydrous LiB₁₁H₁₄ compound or a composition comprising an anhydrous LiB₁₁H₁₄ compound according to claim 12 prepared by a method according to any one of claims 1 to 11.

14. Use of an anhydrous LiB₁₁H₁₄ compound or a composition according to any of claims 12 or 13 for preparing a Li-ion conducting solid state electrolyte for use in lithium batteries.

15. An electrolyte and/or battery comprising an anhydrous LiB₁₁H₁₄ compound or a composition according to any of claims 12 or 13, optionally comprising Li_{x+y}(B₁₁H₁₄)ₓ(CB₁₁H₁₂)_{y}, Li_{x+2y}(B₁₁H₁₄)ₓ(B₁₂H₁₂)_{y}, Li_{x+y}(B₁₁H₁₄)(CB₉H₁₀)_{y}, wherein X is 1 to 9, optionally about 1 to 2, and Y is 1 to 2.
